# EUROPEAN PATENT SPECIFICATION

(11) **EP 1 789 599 B1**
(45) Date of publication and mention of the grant of the patent: **27.08.2008**
(21) Application number: 05776059.7
(22) Date of filing: 08.07.2005
(51) Int. Cl.: C22B 3/18

(54) **TANK BIOLEACHING PROCESS**
TANKBIOAUSLAUGUNGSVERFAHREN
PROCESSUS DE LIXIVIATION EN BASSIN

(30) Priority: 20.07.2004 ZA 200405281
(43) Date of publication of application: 30.05.2007
(73) Proprietor: BHP Billiton SA Limited, Randburg 2194 (ZA)
(72) Inventor: BOWKER, Clint, 2194 Randburg (ZA); BATTY, John, 2194 Randburg (ZA); RORKE, Gary, 200 Hans Strijdom Drive, 2194 Randburg (ZA); STRAUSS, Hannes, 2194 Randburg (ZA); BARNARD, Paul, 2194 Randburg (ZA); DU PLESSIS, Chris, 200 Hans Strijdom Drive, 2194 Randburg (ZA)
(74) Representative: Mütschele, Thomas
(86) International application number: PCT/ZA2005/000104
(87) International publication number: WO 2006/010170

(56) References cited:
- US-A- 5 231 018
- US-A- 6 156 329
- US-A1- 2004 038 354
- US-B1- 6 395 061
- TZEFERIS P G: "USE OF MOLASSES IN HETEROTROPHIC LATERITE LEACHING" ERZMETALL, GMBD - MEDIENVERLAG, CLAUSTHAL-ZELLERFELD, DE, vol. 48, no. 10, 1 October 1995 (1995-10-01), pages 726-738, XP000535359 ISSN: 0044-2658
- LEE E.Y. ET AL.: "Leaching of Mn, Co, and Ni from Manganese Nodules Using an Anaerobic Bioleaching Method" JOURNAL OF BIOSCIENCE AND BIOENGINEERING, vol. 92, no. 4, 2001, pages 354-359, XP002355152

## Description

### BACKGROUND OF THE INVENTION

This invention relates generally to a tank bioleaching process and more particularly is concerned with the supply of carbon to microbial cells used in a tank bioleaching process.

In tank bioleaching microbial cells are used to oxidise reduced sulphur and iron of milled mineral concentrates which contain valuable or target metals. Such a process is described e.g. in US 2004/0038354.

The tank or reactor contains a slurry of the concentrate which is agitated and to which nutrients are added. The slurry is sparged with air or enriched air and its pH is controlled usually in the range of 0.8 - 2 pH.

At mesophilic temperatures, below 45°C, bacteria are used while at thermophilic temperatures, above 45°C, archaea are used to catalyze the oxidation process which results in the decomposition of the mineral. The valuable metal is thus either directly solubilised or its down-stream recovery is improved.

The microbial cells which are used in this type of bioleaching process are usually chemolithrophs and grow autotrophically by fixing carbon dioxide, from the atmosphere or in a supplied gas phase, in order to satisfy their carbon requirements. Microbial cells require carbon as a fundamental component of cellular metabolites and functional products. In the publication of Tzeferis P.G., Erzmetall 48 (1995), Nr. 10, the use of molasses are described as inexpensive source of carbon.

In the case of thermophilic bioleaching (above 45°C) the use of enriched air is important due to the reduced solubility and resulting reduced mass transfer of CO₂ and oxygen with an increase in temperature. The enriched air may contain an elevated concentration of oxygen or carbon dioxide for it is well documented that such elevated concentrations are required in order to achieve optimal microbial growth and ferrous and sulphur oxidation rates.

The oxygen and carbon dioxide required to enrich the air which is sparged into the reactor are normally produced by generation plants. The capital and operating costs of these plants are however significant with the cost associated with carbon dioxide being particularly expensive. Further, the utilization percentage of supplied carbon dioxide during a bioleaching process can be low, often less than 40%. This adds materially to the cost of operating a bioleaching plant.

In some instances the concentrate material that is subjected to bioleaching contains silver, in addition to the metal of interest, usually copper, nickel or gold. The presence of silver may in certain instances result in severe inhibitory effects towards microbial cells, and thus negatively affect the bioleaching process. Although silver is only sparingly soluble under typical bioleaching conditions, dissolution of the mineral in which silver is contained results in the transient presence of silver in solution before complexation and precipitation occurs in the reactor. Such transient solubility is sufficient to result in rapid interaction of silver with microbial cells, where the silver most commonly penetrates the cell membrane and binds, with high affinity, to compounds contained in the cellular cytoplasm. The compounds with which silver is most likely to interact in the cell are the sulphur-containing amino acids cysteine and methionine, amongst other. Silver inhibitory effects can readily be observed by transmission electron microscopy, in conjunction with metal analysis techniques, as the presence of silver nodules inside affected cells.

### SUMMARY OF THE INVENTION

The invention is directed to the use of non-gaseous carbon according to claim 1.

Carbon which is supplied to the process in the aforementioned manner can be in place of, or in addition to, carbon which is supplied to the process in the form of carbon dioxide.

Any appropriate source can be used for supplying carbon in a non-gaseous form. The source may be selected from water-soluble carbon and inorganic carbonaceous solid compounds such as carbonates.

Preferably the carbon is derived from an organic soluble carbon which may be selected from yeast, a yeast extract, and carbon extracts or carbon derived from activated sludge, tannery effluents, spent bioleaching biomass, molasses, corn steep liquor, sucrose, glucose and methanol.

Yeast extract is a preferred carbon source for it usually contains a number of nutritional compounds such as vitamins, amino acids, and co-factors, in addition to carbon, which promote microbial growth. Similar compounds include meat extract. Such complex nutritional compounds way be used on their own or in conjunction with pure carbon sources. The aim of using such mixtures (as yeast extract) would be to replace at least the carbon supplied by the complex nutritional source, and thus reduce the overall consumption of the yeast extract.

Complex nutritional sources such as yeast extract contain a large variety of other nutritional compounds in addition to carbon. Amongst these are compounds with a high affinity for complexing silver from solution. These compounds are thought to be sulphur-containing amino acids, but may also include other currently unknown compounds. The unexpected benefit is that these compounds act by rapidly scavenging silver from the dissolved state, thus preventing and/or reducing the detrimental interaction of silver with the microbial or bioleaching cells. This mechanism facilitates a more robust bioleaching process for ores containing silver that would otherwise prohibit the processing of such ores by biohydrometallurgical means.

Pure carbon sources such as sucrose can be used in combination with complex nutrients sources (such as yeast extract). The use of sucrose has been found to have a unexpected benefit in such applications as it seems to increase the cell membrane robustness, stability and integrity under the harsh bioleaching conditions. This is beneficial from an operation process point of view.

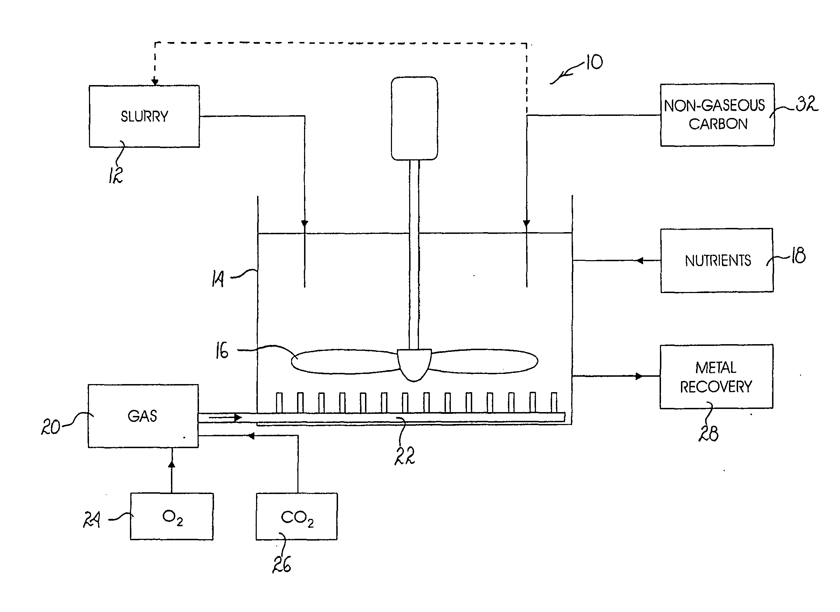

### BRIEF DESCRIPTION OF THE DRAWING

The invention is further described by way of example with reference to the accompanying drawing which schematically illustrates a tank bioleaching process operated in accordance with the principles of the invention.

### DESCRIPTION OF THE PREFERRED EMBODIMENT

The accompanying drawing illustrates, somewhat schematically, a tank bioleaching process 10. In the process a slurry 12 which contains mineral concentrates milled to a small particle size, typically less than 80 micrometers, is directed to a reactor or tank 14 which includes a motor driven impeller 16 used for agitating the slurry. The slurry is inoculated with known bacteria and, optionally, nutrients 18 are supplied to the slurry in the reactor in accordance with known criteria.

Gas 20 is supplied to a sparging system 22 in the reactor. The gas may be air which is enriched with oxygen 24 and, optionally, carbon dioxide 26, according to requirement.

The slurry in the reactor is kept at a desired pH level and at a desired temperature, in accordance with known criteria, so that the bioleaching process decomposes or solubilises the target metals which are subsequently recovered in a downstream process 28.

As has been explained in the preamble hereto the carbon dioxide source 26 represents a significant cost factor in the bioleaching process. The cost of generating the carbon dioxide is high and, moreover, the utilization percentage of the carbon dioxide, by the slurry in the reactor, is low. This means, in effect, that a significant proportion of the carbon dioxide which is generated is not used and escapes to atmosphere.

While organic carbon supplementation is well known in the art of culturing bioleaching cells, this is not currently used in any commercial tank bioleaching operations of which the applicant is aware. The unexpected benefits in terms of silver scavenging and increased cell membrane robustness are also not anticipated at commercial scale. The invention provides that all or part of the carbon requirement of the microbial cells in the bioleaching process is met by supplying carbon 32 in a non-gaseous form to the reactor. A preferred carbon source, in this respect, is a water-soluble yeast extract, which may be used in combination with a pure carbon source such as sucrose.

Most bioleaching microorganisms have an obligate requirement for carbon dioxide as their sole source of carbon although some strains, e.g. facultative autotrophic and facultative heterotrophic, are less peremptory in this respect. Such strains are thus able to use carbon sources other than carbon dioxide either as a substitute for the carbon dioxide or as a supplement to the carbon dioxide. It is thus possible to achieve an optimal tank bioleaching condition by supplying a water-soluble organic carbon source, such as a yeast extract 32, to the tank. The carbon source is preferably supplied in liquid form and is pumped into the reactor 14 or, as is indicated by a dotted line, into the slurry feed 12 or, alternatively or additionally, is added as a dry powder to the slurry in the tank.

The non-gaseous carbon is maintained in the reactor at a concentration which may lie in the range of from 10 to 600 mg/L although, according to requirement, higher or lower concentrations of the carbon source material may prevail in the slurry.

Preferably use is made of microbial strains in the bioleaching process which are more adept at utilizing organic-based carbon sources, such as yeast extract, rather than carbon dioxide. Yeast extract is a product which is produced by methods, known in the art, that include a lysis step (i.e. rupturing of the cells), thus releasing the contents of the cells. The water-soluble cell content is separated from the cell particulates and is produced either as a paste or as a dry water-soluble powder. The final product, known as yeast extract, contains a high concentration and variety of amino acids, vitamins, and organic and inorganic nutrients and is therefore suitable for use in microbial growth media.

The yeast extract can often be obtained at a lower cost, measured on carbon content, than CO₂. Also, the utilisation of carbon in the yeast, by the microbial cells, is more effective (i.e. more carbon is used) than when the carbon is presented in gaseous form i.e. as CO₂. The use of yeast extract with pure carbon sources such as sucrose, may reduce the overall cost of such carbon supplementation.

It is possible to make use of alternative or additional carbon sources which include water-soluble complex carbon extracts which are produced from plant material such as molasses and corn steep liquor or wastewater from tannery effluents or activated sludge from sewage plants. These substances contain mainly carbon compounds but usually contain a smaller variety of amino acids and vitamins than yeast extract.

Other soluble carbon sources, suitable for use in the invention, are carbon compounds that are purified to a level where the main constituent compound dominates and can be readily identified, such as sucrose, glucose and methanol.

By making use of a water-soluble carbon source, such as a yeast extract (complex nutritional source) alone or in combination with sucrose (a pure carbon source), in a tank bioleaching process, the operating and capital costs of the process are reduced due to the lower or eliminated requirement for carbon dioxide. Other benefits which arise include the following:
(a) improved ease of operation due to a smaller gas sparging requirement;
(b) reduced agitator and sparging capital and operating costs;
(c) reduced inhibitory effects caused by silver;
(d) increased cell membrane robustness resulting in improved process robustness;
(e) improved nutritional conditions in the slurry in the reactor. This is as a result of the release of amino acids, vitamins and other micronutrients from the organic carbon source to optimise microbial growth and bioleaching performance; and
(f) increased solubility of sulphur compounds in the presence of organic soluble carbon thus increasing the sulphur oxidation rate and therefore improving the effectiveness of the bioleaching process.

The benefits can be achieved with either mesophilic or thermophilic tank bioleaching processes.

## Claims

1. Use of non-gaseous carbon for reducing an inhibitory effect of silver to microbial cells used in a tank bioleaching process, said silver being contained in a concentrate which is subjected to the tank bioleaching process.

2. Use according to claim 1, wherein the bioleaching process includes a step of supplying carbon in the form of carbon dioxide to the microbial cells.

3. Use according to claim 1 or claim 2, wherein the non-gaseous carbon is derived from a source selected from water-soluble carbon and inorganic carbonaceous solid compounds.

4. Use according to any of claims 1 to 3, wherein the non-gaseous carbon is derived from an organic soluble carbon which is selected from yeast, a yeast extract, and carbon derived from activated sludge, tannery effluents, spent bioleaching biomass, molasses, corn steep liquor, sucrose, glucose and methanol.

5. Use according to any of claims 1 to 4, wherein the non-gaseous carbon is derived at least from sucrose in combination with a yeast extract.

## Patentansprüche

1. Verwendung von nicht-gasförmigem Kohlenstoff zur Verringerung eines inhibitorischen Effektes von Silber gegenüber mikrobiellen Zellen, die in einem Tank-Bioauslaug-Verfahren verwendet werden, wobei das Silber in einem Konzentrat enthalten ist, welches dem Tank-Bioauslaug-Verfahren unterzogen wird.

2. Verwendung gemäß Anspruch 1, wobei das Bioauslaugverfahren eines Schritt der Zuführung von Kohlenstoff in Form von Kohlendioxid zu den mikrobiellen Zellen einschließt.

3. Verwendung gemäß Anspruch 1 oder Anspruch 2, wobei der nicht-gasförmige Kohlenstoff von einer Quelle abgeleitet wird, die aus wasserlöslichem Kohlenstoff und anorganischen kohlenstoffhaltigen festen Verbindungen gewählt ist.

4. Verwendung gemäß mindestens einem der Ansprüche 1 bis 3, wobei der nicht-gasförmige Kohlenstoff von einem organischen löslichen Kohlenstoff abgeleitet ist, welcher aus Hefe, einem Hefeextrakt und Kohlenstoff, welcher von aktiviertem Schlamm, Gerberei-Abflüssen, verbrauchter Bioauslaug-Biomasse, Molassen, Maistränkflüssigkeit, Sucrose, Glucose und Methanol abgeleitet ist, gewählt wird.

5. Verwendung gemäß mindestens einem der Ansprüche 1 bis 4, wobei der nicht-gasförmige Kohlenstoff zumindest von Sucrose in Kombination mit einem Hefeextrakt abgeleitet ist.

## Revendications

1. Utilisation de carbone non gazeux pour réduire un effet inhibiteur d'argent sur des cellules microbiennes employées dans un procédé de biolixiviation en cuve, ledit argent étant contenu dans un concentré qui est soumis au procédé de biolixiviation en cuve.

2. Utilisation selon la revendication 1, dans laquelle le procédé de biolixiviation comprend une étape d'apport de carbone sous la forme de dioxyde de carbone aux cellules microbiennes.

3. Utilisation selon la revendication 1 ou la revendication 2, dans laquelle le carbone non gazeux est dérivé d'une source choisie parmi le carbone hydrosoluble et les composés carbonés inorganiques solides.

4. Utilisation selon l'une quelconque des revendications 1 à 3, dans laquelle le carbone non gazeux est dérivé d'un carbone organique soluble qui est choisi parmi la levure, un extrait de levure, et le carbone dérivé de boues activées, d'effluents de tannerie, de biomasse de biolixiviation épuisée, de mélasse, d'extrait soluble de maïs, de saccharose, de glucose ou de méthanol.

5. Utilisation selon l'une quelconque des revendications 1 à 4, dans laquelle le carbone non gazeux est dérivé au moins de saccharose en combinaison avec un extrait de levure.
